# DEMANDE DE BREVET EUROPEEN

(11) **EP 4 815 293 A1**
(43) Date de publication de la demande: **30.09.2026**
(21) Numéro de dépôt: 26164533.7
(22) Date de dépôt: 13.03.2026
(51) Int. Cl.: H02P 21/05

(54) **PROCÉDÉ DE DÉTERMINATION DES COURANTS FONDAMENTAUX, ET D'HARMONIQUES DE COURANT POUR LA COMMANDE D'UNE MACHINE ÉLECTRIQUE**

(30) Priorité: 28.03.2025 FR 2503215
(71) Demandeur: IFP Energies nouvelles, 92500 Rueil-Malmaison (FR)
(72) Inventeur: VIDAL NAQUET, Fabien, 92852 RUEIL-MALMAISON CEDEX (FR); HAJE OBEID, Najla, 92852 RUEIL-MALMAISON CEDEX (FR)
(74) Mandataire: IFP Energies nouvelles

(57) **Abrégé**

La présente invention concerne un procédé de filtrage et de nettoyage des courants statoriques, en isolant les harmoniques de courant de rang H-1 et H+1 d'une machine électrique (H correspondant à un rang d'harmonique de couple de la machine électrique). L'invention met en œuvre trois rotations P dans le repère de Park, et deux filtres passe-haut (FPH1, FPH2).

En outre, l'invention concerne un procédé et un système de commande d'une machine électrique mettant en œuvre le procédé de filtrage selon l'invention.

## Description

### Domaine technique

La présente invention concerne la commande d'une machine électrique tournante, de préférence une machine électrique synchrone à aimants permanents, par exemple du type synchro-reluctante ou synchrone à aimants permanents à pôles saillants ou une machine à pôles lisses.

L'invention concerne également un système de commande mettant en œuvre un tel procédé.

Il est connu d'avoir recours à des machines électriques tournantes telles que des machines électriques synchrones à aimants permanents ou des machines synchro-réluctantes, en particulier des machines synchro-réluctantes assistées d'aimants permanents. De telles machines électriques sont, par exemple, utilisées dans le domaine de la propulsion, par exemple pour la génération de couples moteurs à bord d'un véhicule tel qu'un véhicule automobile.

Un procédé de commande d'une telle machine électrique comprend généralement le calcul de courants et de tensions dits « directs » et « en quadrature » (également appelé « quadratique »), qui sont des courants et des tensions exprimés dans un repère tournant lié au rotor, et la mise en œuvre d'un ou plusieurs asservissements, afin de déterminer les tensions à appliquer à chaque phase de la machine tournante.

### Technique antérieure

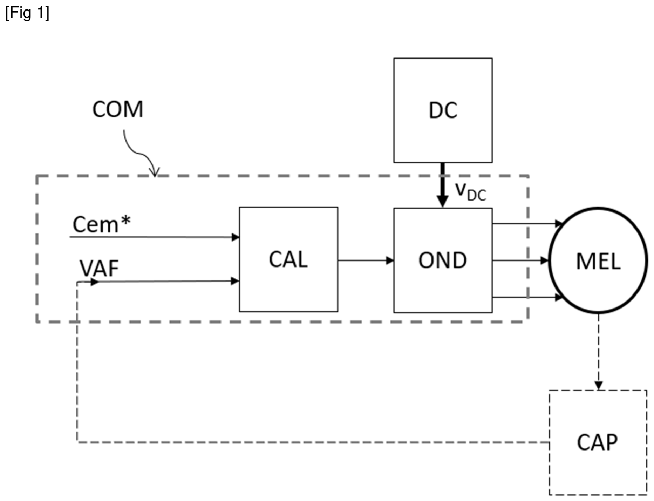

Sur la figure 1 est représentée, schématiquement et de manière non limitative, une installation comprenant une machine électrique tournante MEL associée, pour sa commande, à un système de commande COM (le système de commande COM mettant en œuvre le procédé de commande). L'installation comporte également une source DC d'énergie électrique, telle qu'un bus de tension continue.

La machine électrique tournante MEL est une machine tournante avec plusieurs phases, de préférence trois phases (alternativement la machine électrique peut comporter un nombre de phases multiple de trois, par exemple six, neuf ou douze, ou encore quatre ou cinq phases). Avantageusement, la machine électrique tournante MEL peut être une machine électrique synchrone. La machine électrique synchrone MEL peut être une machine électrique synchrone à aimants permanents.

Pour l'exemple illustré (non limitatif), la machine électrique synchrone MEL comporte trois entrées. Chaque entrée correspond à une phase d'un stator (non représenté) de la machine électrique tournante MEL.

Le système de commande COM est destiné à piloter, au cours du temps, l'alimentation de la machine tournante MEL en fonction de valeurs cibles et/ou de valeurs mesurées de grandeurs prédéterminées. Ces valeurs cibles et/ou valeurs mesurées sont appelées dans la suite de la description variables de fonctionnement de la machine électrique. Pour l'exemple de la figure 1, le système de commande COM prend en compte une consigne de couple Cem* (qui peut provenir classiquement d'une demande de l'utilisateur de la machine électrique, alternativement cette consigne de couple peut être calculée par une régulation de vitesse) et/ou une consigne de courant (non représentée) et/ou une consigne de tension (non représentée), et/ou au moins une autre variable de fonctionnement VAF qui peut être une mesure ou une consigne. On appelle variable de fonctionnement de la machine électrique, une grandeur qui caractérise le fonctionnement de la machine électrique, il peut s'agir notamment d'une variable électrique, comme la tension, le courant, ou la puissance de la machine électrique, d'une variable mécanique comme la position, la vitesse ou l'accélération du rotor de la machine électrique, etc. Les variables de fonctionnement peuvent par exemple être la vitesse de rotation électrique ωₑ du rotor (non représenté) de la machine électrique, l'amplitude de tension de la machine électrique, l'amplitude du courant de la machine électrique (alternativement cette variable peut aussi être la norme du flux magnétique dans les phases), une température de la machine électrique, le flux magnétique dû aux aimants, etc. On rappelle que la vitesse de rotation électrique ωₑ du rotor correspond à la multiplication de la vitesse de rotation mécanique ωₘ du rotor par le nombre de paires de pôles de la machine électrique synchrone MEL. En d'autres termes, on peut écrire : ωₑ=p.ωₘ avec p le nombre de paires de pôles de la machine électrique synchrone MEL.

Le système de commande COM comporte un onduleur OND et un calculateur CAL. Le système de commande COM peut comporter si besoin un capteur CAP de position angulaire et/ou de vitesse de rotation angulaire du rotor de la machine électrique MEL. Un tel capteur permet de déterminer la vitesse de rotation angulaire mécanique ωₘ de la machine électrique soit directement (cas d'un capteur de vitesse), soit par dérivation (cas du capteur de position). En outre, le système de commande COM peut comporter des moyens de mesure des courants (non représentés) dans les phases de la machine électrique, par exemple des capteurs de courant.

L'onduleur OND est configuré pour acheminer de l'énergie électrique entre la source DC et la machine électrique synchrone MEL. Plus précisément, l'onduleur OND est configuré pour acheminer de l'énergie électrique entre la source DC et chaque phase du stator de la machine électrique synchrone MEL. La source DC (par exemple une batterie) fournit une tension de bus continu, notée V_{DC}.

L'onduleur OND comporte une première entrée reliée à la source DC, et trois sorties, chacune reliée à une phase correspondante du stator de la machine électrique synchrone MEL. L'onduleur OND comporte, en outre, une deuxième entrée électriquement reliée à une sortie du calculateur CAL, de sorte que l'onduleur OND est configuré pour acheminer de l'énergie électrique entre la source DC et la machine électrique synchrone MEL en fonction d'un signal de commande de commutation appliqué par le calculateur CAL à la deuxième entrée de l'onduleur OND.

De préférence, le signal de commande de commutation peut être tel que l'onduleur OND achemine de l'énergie électrique depuis la source DC vers la machine électrique synchrone MEL de sorte que la machine électrique synchrone MEL présente un fonctionnement communément appelé « moteur » et/ou un fonctionnement communément appelé « générateur ». Classiquement, l'onduleur OND comporte plusieurs bras de commutation (non représentés), de préférence au moins un bras de commutation pour chaque phase de la machine électrique, pour transformer le signal continu depuis la source DC en un signal alternatif pour les phases de la machine électrique MEL. Chaque bras de commutation comporte au moins un commutateur commandé. De manière classique, on peut commander chaque commutateur des bras de commutation au moyen d'une modulation de largeur d'impulsion connue sous l'acronyme MLI (ou PWM de l'anglais Pulse Width Modulation).

En outre, le capteur optionnel CAP de position angulaire ou de vitesse de rotation angulaire peut être configuré pour appliquer le signal de position angulaire (respectivement de vitesse de rotation angulaire) à une entrée correspondante du calculateur CAL.

Dans la présente demande, l'indice d indique la valeur « directe » dans le repère de Park, l'indice q indique la valeur « quadratique » dans le repère de Park, et l'indice dq indique un vecteur des valeurs « directe » et « quadratique ». Par exemple la tension v_{dq} désigne les tensions (v_{d}, v_{q}).

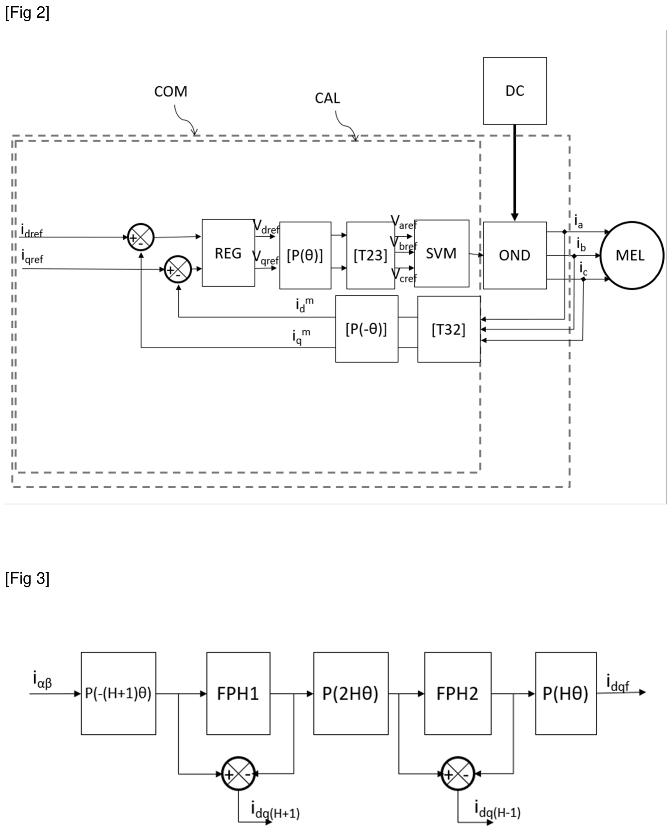

La figure 2 est un schéma équivalent de la commande vectorielle des courants fondamentaux d'une machine électrique. Les éléments identiques à la figure 1 ne sont pas redécrits. Pour l'exemple de la figure 2, les consignes en entrée sont des consignes de courants, notées i_{dref} et i_{qref} (dans le repère de Park). De plus, les courants iₐ, i_{b}, i_{c} (exprimés dans le repère du stator) sont mesurés dans les phases de la machine électrique MEL. Ces mesures sont transformées d'abord dans le repère de Clarke au moyen de la matrice de Clarke noté T₃₂, puis par une matrice de rotation notée P, d'un angle -θ, θ étant l'angle électrique du rotor. Ces deux transformées forment ensemble la transformée de Park. La transformée de Concordia peut être utilisée à la place de Clarke dans l'ensemble de la présente demande, la seule différence est que Clarke conserve les amplitudes des signaux alors que Concordia conserve les puissances. En entrée d'un régulateur de courant REG, les consignes de courant sont comparées aux courants mesurés. Le régulateur de courant REG détermine des consignes de tensions notées V_{dref} et V_{qref}. Ces consignes de tensions V_{dref} et V_{qref} exprimées dans le repère de Park, sont ensuite exprimées dans le repère lié au stator au moyen d'une rotation P d'un angle θ et d'une transformée inverse de Clarke T23 pour déterminer un signal de commande SVM de commutation de l'onduleur OND au moyen des consignes de tension V_{aref} V_{bref} et V_{cref}.

Les commandes peuvent générer des oscillations de couple de la machine électrique, et/ou générer des caractéristiques sonores ou vibratoires de la machine électrique et/ou de son environnement (connu sous l'acronyme anglophone NVH pour « Noise Vibration Harshness »). Les oscillations de couple ainsi que les NVH sont le plus souvent autour de l'harmonique 6 et 12 électrique équivalents à (6 ou 12)*Pp mécaniques, Pp étant le nombre de paires de pôles machine. Par exemple, l'harmonique de couple 6 a pour origine les harmoniques 5 et 7 de flux dans le repère triphasé (abc). On peut noter qu'il y a une différence de ±1 entre l'ordre des harmoniques dans le repère fixe (abc) et les harmoniques vues dans le couple qui est lié au repère tournant (dq).

Pour compenser les oscillations de couple et les NVH, plusieurs méthodes existent parmi lesquelles la réalisation d'injection d'harmoniques dans la machine électrique. Ainsi, par exemple, réaliser des injections d'harmoniques dans le repère fixe (abc) pour compenser l'harmonique 6 de couple, revient à injecter des courants harmoniques dans la machine d'ordre 5 et/ou 7, qui vont créer des flux harmoniques 5 et 7 et vont influencer les harmoniques de couple et les forces vibratoires.

Pour réaliser une injection d'harmonique dans une machine électrique via son système de contrôle, plusieurs solutions sont possibles.

Les documents suivants :
- X. X. Huo, S. J. Hu, H. H. Xu and D. S. Lv, "Harmonic elimination in multiple synchronous rotating reference frames of PMSG for wind power generation," 2013 IEEE International Conference on Applied Superconductivity and Electromagnetic Devices, Beijing, China, 2013, pp. 52-56, doi: 10.1109/ASEMD.2013.6780706.
- M. Seilmeier, S. Arenz, B. Piepenbreier and I. Hahn, "Model based closed loop control scheme for compensation of harmonic currents in PM-synchronous machines," SPEEDAM 2010, Pisa, Italy, 2010, pp. 1-6, doi: 10.1109/SPEEDAM.2010.5542398
- G. Liu, B. Chen, K. Wang and X. Song, "Selective Current Harmonic Suppression for High-Speed PMSM Based on High-Precision Harmonic Detection Method," in IEEE Transactions on Industrial Informatics, vol. 15, no. 6, pp. 3457-3468, June 2019, doi: 10.1109/TII.2018.2873652.
décrivent une méthode pour injecter des courants harmoniques dans une machine électrique à l'aide d'une boucle de régulation dans un repère (dqh) lié au rang de l'harmonique à injecter. Afin de réguler un courant harmonique de rang h donné, il est nécessaire de le mesurer et de l'extraire du courant total, surtout que la composante fondamentale est souvent dominante ce qui peut perturber la régulation harmonique. Dans ces documents, une solution consiste à réaliser une transformation de Park d'un angle (-hθ) suivie d'un filtre passe-bas. Ainsi pour réaliser une injection d'harmoniques 5 et 7, il faut trois transformations (rotations) de P(-θ), P(5θ) et P(-7θ) et de trois filtres passe-bas pour isoler les courants harmoniques des courants fondamentaux. Cette solution ne permet pas d'isoler les composantes harmoniques sans restreindre la régulation des courants aux courants fondamentaux, et est sensible aux bruits de mesure et aux perturbations basses fréquences. De plus, cette méthode est dépendante de la fréquence électrique des signaux, ce qui peut être problématique pour les comportements en transitoire.

### Résumé de l'invention

L'invention a pour objectif le filtrage et le nettoyage des courants statoriques, de manière indépendante de la fréquence électrique, en étant performant en transitoire, tout en conservant une bonne observabilité du continu spectral des courants statoriques. Dans ce but, la présente invention concerne un procédé de filtrage et de nettoyage des courants statoriques, en isolant les harmoniques de courant de rang H-1 et H+1 d'une machine électrique (H correspondant à un rang d'harmonique de couple de la machine électrique). L'invention met en œuvre trois rotations dans le repère de Park, et deux filtres passe-haut. Ainsi, l'invention permet d'isoler les composantes harmoniques du reste du signal sans restreindre la régulation des courants principaux aux composantes fondamentales uniquement. De plus, ce procédé est moins dépendant de la fréquence électrique des signaux par rapport aux méthodes classiques ce qui permet de réduire l'ordre des filtres passes-hauts et d'avoir un meilleur comportement en transitoire. En outre, la méthode d'extraction des courants harmoniques du reste du signal ne nécessite pas l'ajout de boucle de régulation supplémentaire comme celle des harmoniques. Dans ce cas-là, cette chaîne de démodulation peut servir pour réaliser un nettoyage ciblé des courants et stabiliser leur régulation. Même si la composante fondamentale reste dominante dans les courants filtrés et nettoyés, ce procédé permet de garder une large bande passante pour les courants et une meilleure observabilité de leur contenu spectral.

La présente invention sert également pour limiter les oscillations de couple de la machine électrique, et/ou les caractéristiques sonores ou vibratoires de la machine électrique, en étant performant en transitoire, en stabilisant la régulation des courants. L'invention concerne un procédé et un système de commande d'une machine électrique mettant en œuvre le procédé décrit ci-dessus et une régulation des courants harmoniques. Cette invention peut mettre en œuvre en outre des étapes de détermination de consigne de tension et d'injection de tension d'harmoniques, pour déterminer et appliquer un signal de commutation de l'onduleur de la machine électrique.

L'invention concerne un procédé de détermination des courants statoriques filtrés, et d'harmoniques de courant de rang H-1 et H+1 pour la commande d'une machine électrique comprenant plusieurs phases, notamment d'une machine synchrone, H étant un harmonique de couple prédéterminé de ladite machine électrique, ledit procédé mettant en œuvre des mesures de courant dans les phases de ladite machine électrique exprimées dans le repère de Clarke ou de Concordia. Pour ce procédé, on met en œuvre les étapes suivantes :
a) On détermine, dans le repère tournant lié à l'harmonique de rang H+1, les courants direct et quadratique de l'harmonique de rang H+1 au moyen d'une première matrice de rotation desdits courants dans le repère de Clarke d'un angle de - (H+1) fois l'angle électrique du rotor et au moyen d'un premier filtre passe-haut ;
b) On détermine, dans le repère tournant lié à l'harmonique de rang H-1, les courants direct et quadratique de l'harmonique de rang H-1 au moyen d'une deuxième matrice de rotation desdits courants de l'harmonique de rang H+1 d'un angle de 2H fois l'angle électrique du rotor et au moyen d'un deuxième filtre passe-haut ; et
c) On détermine, dans le repère tournant lié au fondamental, les courants direct et quadratique des courants statoriques filtrés au moyen d'une troisième matrice de rotation desdits courants de l'harmonique de rang H-1 d'un angle de H-1 fois l'angle électrique du rotor.

Selon un aspect, ledit harmonique prédéterminé est choisi parmi l'harmonique 6, l'harmonique 12, ou l'harmonique de rang six fois le nombre de paires de pôles de la machine électrique, ou l'harmonique de rang douze fois le nombre de paires de pôles de ladite machine électrique.

De préférence, chacune desdites matrices de rotation s'expriment par : $P \left({θ}_{rot}\right) = \left[\begin{matrix}cos \left({θ}_{rot}\right) & - sin \left({θ}_{rot}\right) \\ sin \left({θ}_{rot}\right) & cos \left({θ}_{rot}\right)\end{matrix}\right]$ avec *θᵣₒₜ* l'angle de rotation.

De plus, l'invention concerne un procédé de commande d'une machine électrique, notamment une machine synchrone, comprenant plusieurs phases et pilotée par un onduleur pourvu de bras de commutation par phase de ladite machine électrique. Pour ce procédé, on met en œuvre les étapes suivantes :
a) On acquiert des consignes du fondamental de courant ;
b) On mesure les courants dans lesdites phases de ladite machine électrique ;
c) On transforme lesdites mesures de courant dans le repère de Clarke ou de Concordia ;
d) On détermine les courants statoriques direct et quadratique mesurés et filtrés, et des harmoniques de courant mesuré de rang H-1 et H+1 au moyen du procédé selon l'une des caractéristiques précédentes, à partir desdites mesures de courant exprimés dans le repère de Clarke ou de Concordia ;
e) On détermine des consignes de tension fondamentale, à partir des consignes du fondamental de courant et dudit courant statorique mesuré et filtré ;
f) On détermine un signal de commutation dudit onduleur au moyen desdites consignes de tension fondamentale ; et
g) On commande lesdits bras de commutation dudit onduleur au moyen dudit signal de commande de commutation.

En outre, l'invention concerne un procédé de commande d'une machine électrique, notamment une machine synchrone, comprenant plusieurs phases et pilotée par un onduleur pourvu de bras de commutation par phase de ladite machine électrique, dans lequel on compense un harmonique de rang H prédéterminé de ladite machine électrique en injectant une consigne de tension d'un harmonique de rang H-1 et une consigne de tension d'un harmonique de rang H+1 dans la consigne de tension fondamentale de ladite machine électrique. Pour ce procédé, on met en œuvre les étapes suivantes :
a) On acquiert des consignes du fondamental de courant et des consignes d'harmoniques de courant de rang H+1 et H-1 ;
b) On mesure les courants dans lesdites phases de ladite machine électrique ;
c) On transforme lesdites mesures de courant dans le repère de Clarke ou de Concordia ;
d) On détermine les courants direct et quadratique mesurés et filtrés, et des harmoniques de courant mesuré de rang H-1 et H+1 au moyen du procédé selon l'une des caractéristiques précédentes, à partir desdites mesures de courant exprimés dans le repère de Clarke ou de Concordia ;
e) On détermine des consignes de tension fondamentale, de tension de l'harmonique de rang H+1 et de tension de l'harmonique de rang H-1, à partir des consignes du fondamental de courant et d'harmoniques de courant de rang H+1 et H-1 et dudit courant statorique mesuré et filtré, et des harmoniques de courant mesuré de rang H-1 et H+1 ;
f) On détermine un signal de commutation dudit onduleur au moyen desdites consignes de tension fondamentale, en injectant lesdites consignes de tension de l'harmonique de rang H+1 et de tension de l'harmonique de rang H-1 ; et
g) On commande lesdits bras de commutation dudit onduleur au moyen dudit signal de commande de commutation.

Avantageusement, on détermine lesdites consignes de tension de l'harmonique de rang H+1 et les consignes de tension de l'harmonique de rang H-1, respectivement au moyen d'un régulateur de courant harmonique de rang H+1 et d'un régulateur de courant harmonique de rang H-1.

L'invention concerne également un procédé de commande d'une machine électrique, notamment une machine synchrone, comprenant plusieurs phases et pilotée par un onduleur pourvu de bras de commutation par phase de ladite machine électrique, dans lequel on compense un harmonique de rang H prédéterminé de ladite machine électrique en injectant une consigne de tension d'un harmonique de rang H-1 et une consigne de tension d'un harmonique de rang H+1 dans la consigne de tension fondamentale de ladite machine électrique. Pour ce procédé, on met en œuvre les étapes suivantes :
a) On acquiert des consignes du fondamental de courant et des consignes de tension d'harmoniques de rang H+1 et H-1 ;
b) On mesure les courants dans lesdites phases de ladite machine électrique ;
c) On transforme lesdites mesures de courant dans le repère de Clarke ou de Concordia ;
d) On détermine les courants direct et quadratique mesuré et filtré et des harmoniques de courant mesuré de rang H-1 et H+1 au moyen du procédé selon l'une des caractéristiques précédentes, à partir desdites mesures de courant exprimés dans le repère de Clarke ou de Concordia ;
e) On détermine des consignes de tension fondamentale, à partir des consignes du fondamental de courant et dudit courant filtré et mesuré ;
f) On détermine un signal de commutation dudit onduleur au moyen desdites consignes de tension fondamentale, en injectant lesdites consignes de tension de l'harmonique de rang H+1 et de tension de l'harmonique de rang H-1 ; et
g) On commande lesdits bras du commutation duit onduleur au moyen dudit signal de commande de commutation.

De manière avantageuse, on détermine lesdites consignes de courant fondamental, au moyen d'un régulateur de courant fondamental.

Selon un aspect, on injecte ladite consigne de tension de l'harmonique de rang H+1 après application d'une rotation dans le repère direct et quadratique de rang H+1 d'un angle de (H+1) fois l'angle du rotor, et on injecte ladite consigne de tension de l'harmonique de rang H-1 après une rotation dans le repère direct et quadratique de rang H-1 d'un angle de -(H-1) fois l'angle du rotor.

Selon un mode de réalisation, on détermine ledit signal de commande de commutation au moyen d'un contrôle vectoriel.

En outre, l'invention concerne un système de commande d'une machine électrique comprenant un onduleur pourvu de bras de commutation, un calculateur et une mémoire configurée pour mettre en œuvre les étapes du procédé de commande selon l'une des caractéristiques précédentes pour commander ledit onduleur, de préférence ladite machine électrique , étant une machine synchrone à aimants permanents.

D'autres caractéristiques et avantages des procédés et du système selon l'invention, apparaîtront à la lecture de la description ci-après d'exemples non limitatifs de réalisations, en se référant aux figures annexées et décrites ci-après.

### Liste des figures

[Fig 1]
   La figure 1, déjà décrite, illustre un système de commande d'une machine électrique.
[Fig 2]
   La figure 2, déjà décrite, illustre un système de commande d'une machine électrique selon l'art antérieur, sans injection de tension d'harmoniques.
[Fig 3]
   La figure 3 illustre les étapes du procédé de nettoyage des courants statoriques dans le repère (dq) ainsi que la détermination des courants harmoniques selon une mise en œuvre de l'invention.
[Fig 4]

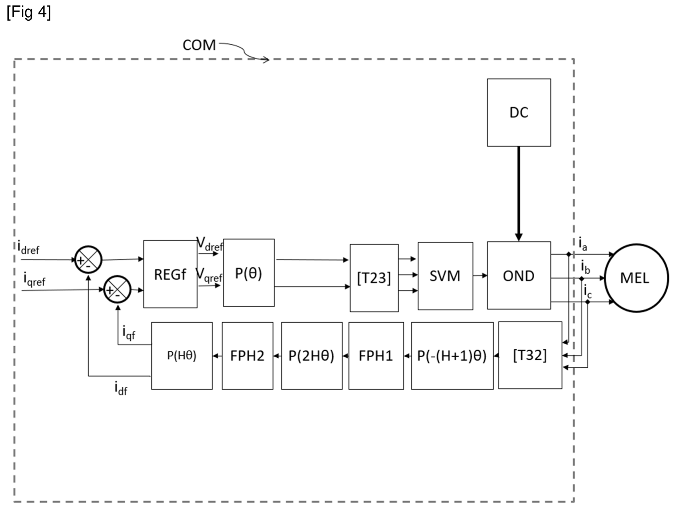

   La figure 4 illustre les étapes de procédé de commande d'une machine électrique selon un premier mode de réalisation de l'invention.
[Fig 5]
   La figure 4 illustre les étapes de procédé de commande d'une machine électrique selon un deuxième mode de réalisation de l'invention.
[Fig 6]

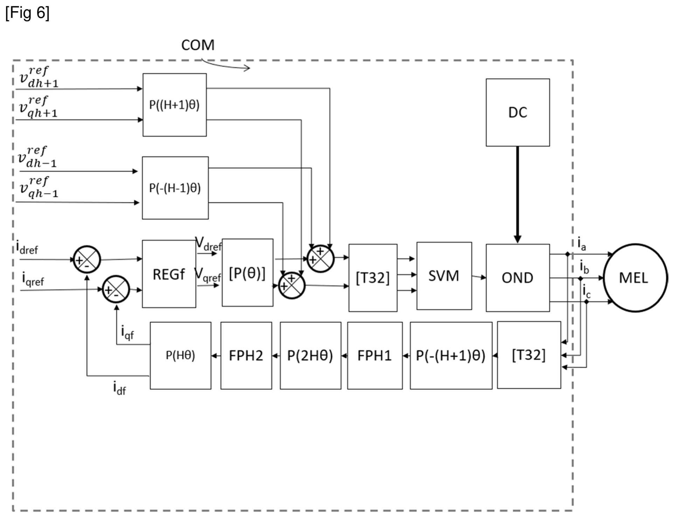

   La figure 6 illustre les étapes de procédé de commande d'une machine électrique selon un troisième mode de réalisation de l'invention.
[Fig 7]

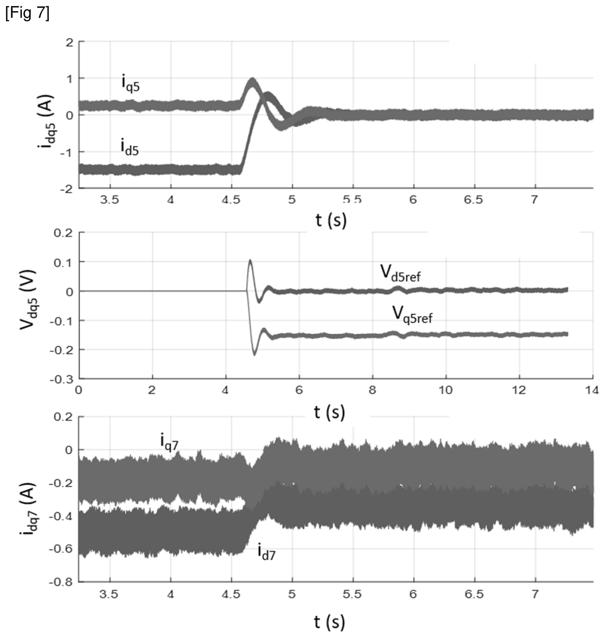

   La figure 7 illustre, pour un exemple, les courants mesurés idq5, les tensions de référence Vdq5ref et les courants mesurés idq7, lorsque le procédé selon un mode de réalisation de l'invention est mis en œuvre.
[Fig 8]

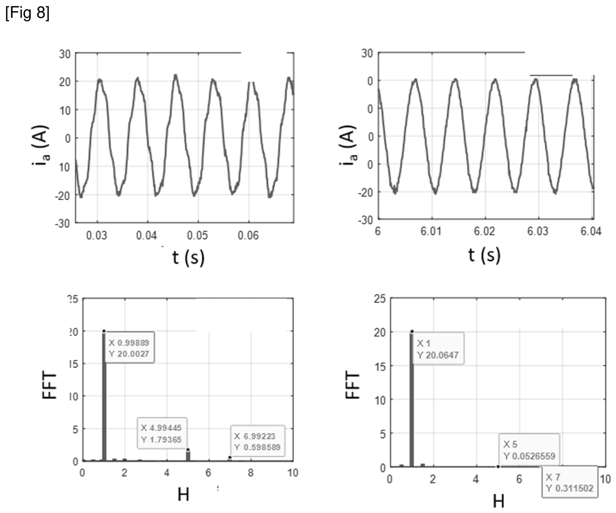

   La figure 8 illustre, pour l'exemple de la figure 7, le courant dans la phase a et le spectre de ce courant dans la phase a, respectivement dans la partie gauche avant activation de la régulation, et dans la partie droite après activation de la régulation (selon un mode de réalisation de l'invention).
[Fig 9]

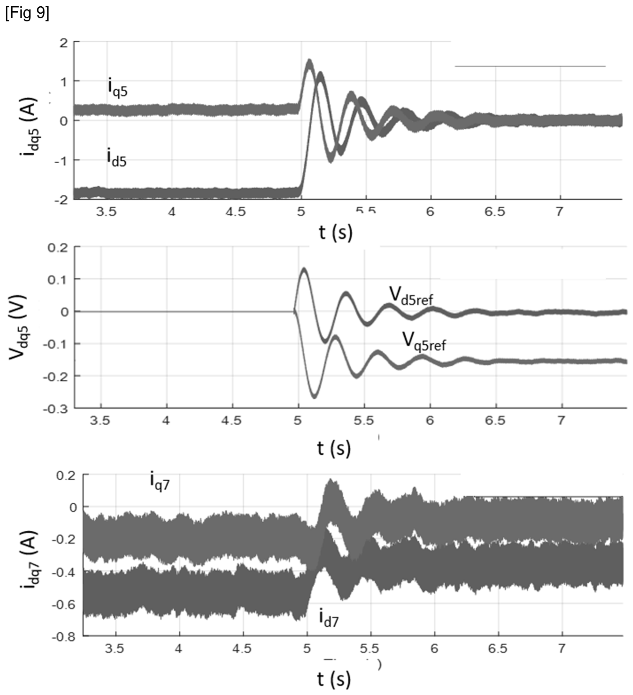

   La figure 9 illustre, pour le même exemple de la figure 7, les courants mesurés idq5, les tensions de références Vdq5ref et les courants mesurés idq7, lorsque le procédé selon un mode de réalisation de l'art antérieur est mis en œuvre.
[Fig 10]

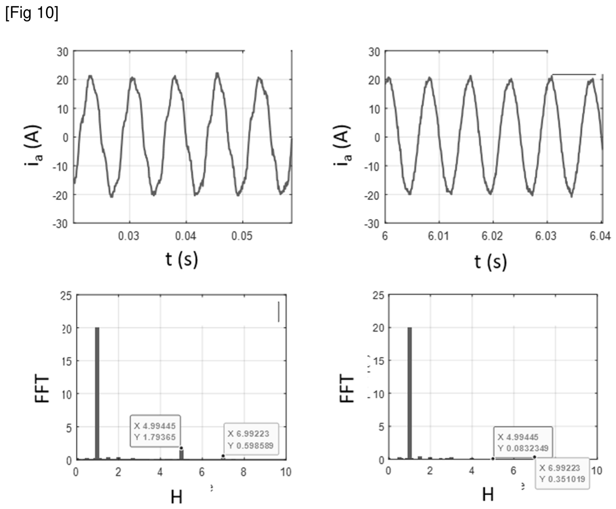

   La figure 10 illustre, pour l'exemple de la figure 9, le courant dans la phase a et le spectre de ce courant dans la phase a, respectivement dans la partie gauche avant activation de la régulation, et dans la partie droite après activation de la régulation (selon un mode de réalisation de l'art antérieur).

### Description des modes de réalisation

L'invention concerne :
- Un procédé de nettoyage et de filtrage des courants statoriques dans le repère (dq) et de détermination des courants harmoniques d'une machine électrique,
- Un procédé de commande d'une machine électrique, et
- Un système de commande d'une machine électrique.

Comme indiqué sur la figure 1, déjà décrite, l'installation comprend une machine électrique tournante MEL associée, pour sa commande, à un système de commande COM, ainsi qu'une source d'énergie électrique DC, telle qu'un bus de tension continue.

La machine électrique tournante MEL est une machine tournante avec plusieurs phases, de préférence trois phases (alternativement la machine électrique peut comporter un nombre de phases multiple de trois, par exemple six, neuf ou douze, ou encore quatre ou cinq phases). Avantageusement, la machine électrique tournante MEL peut être une machine électrique synchrone. De préférence, la machine électrique synchrone MEL peut être une machine électrique synchrone à aimants permanents, notamment une machine électrique à pôles saillants ou à pôles lisses, ou synchro-réluctante, en particulier une machine tournante triphasée synchro-réluctante assistée d'aimants permanents.

Pour l'exemple illustré (non limitatif), la machine électrique synchrone MEL comporte trois entrées. Chaque entrée correspond à une phase d'un stator (non représenté) de la machine électrique tournante MEL.

Le système de commande COM est destiné à piloter, au cours du temps, l'alimentation de la machine tournante MEL en fonction de valeurs cibles et/ou de valeurs mesurées de grandeurs prédéterminées. Ces valeurs cibles et/ou valeurs mesurées sont appelées dans la suite de la description variables de fonctionnement de la machine électrique.

Pour le procédé et le système selon l'invention, le système de commande COM prend en compte une consigne de couple Cem* (qui peut provenir classiquement d'une demande de l'utilisateur de la machine électrique, alternativement cette consigne de couple peut être calculée par une régulation de vitesse), et/ou une consigne de courant (non représentée), et/ou une consigne de tension (non représentée) et/ou au moins une autre variable de fonctionnement VAF qui peut être une mesure ou une consigne. On appelle variable de fonctionnement de la machine électrique, une grandeur qui caractérise le fonctionnement de la machine électrique, il peut s'agir notamment d'une variable électrique, comme la tension, le courant, ou la puissance de la machine électrique, d'une variable mécanique comme la position, la vitesse ou l'accélération du rotor de la machine électrique, etc. Les variables de fonctionnement peuvent par exemple être la vitesse de rotation électrique ωₑ du rotor (non représenté) de la machine électrique, l'amplitude de tension de la machine électrique, l'amplitude du courant de la machine électrique (alternativement cette variable peut aussi être la norme du flux magnétique dans les phases), une température de la machine électrique, le flux magnétique dû aux aimants, etc. On rappelle que la vitesse de rotation électrique ωₑ du rotor correspond à la multiplication de la vitesse de rotation mécanique ωₘ du rotor par le nombre de paires de pôles de la machine électrique synchrone MEL. En d'autres termes, on peut écrire : ωₑ=p.ωₘ avec p le nombre de paires de pôles de la machine électrique synchrone MEL.

Le système de commande COM comporte un onduleur OND et un calculateur CAL. Le système de commande COM peut comporter si besoin un capteur CAP de position angulaire et/ou de vitesse de rotation angulaire du rotor de la machine électrique MEL. Un tel capteur permet de déterminer la vitesse de rotation angulaire ωₘ de la machine électrique soit directement (cas d'un capteur de vitesse), soit par dérivation (cas du capteur de position). En outre, le système de commande COM peut comporter des moyens de mesure des courants (non représentés) dans les phases de la machine électrique, par exemple des capteurs de courant.

L'onduleur OND est configuré pour acheminer de l'énergie électrique entre la source DC et la machine électrique synchrone MEL. Plus précisément, l'onduleur OND est configuré pour acheminer de l'énergie électrique entre la source DC et chaque phase du stator de la machine électrique synchrone MEL. La source DC (par exemple une batterie) fournit une tension de bus continu, notée V_{DC}.

L'onduleur OND comporte une première entrée reliée à la source DC, et trois sorties, chacune reliée à une phase correspondante du stator de la machine électrique synchrone MEL. L'onduleur OND comporte, en outre, une deuxième entrée électriquement reliée à une sortie du calculateur CAL, de sorte que l'onduleur OND est configuré pour acheminer de l'énergie électrique entre la source DC et la machine électrique synchrone MEL en fonction d'un signal de commande de commutation appliqué par le calculateur CAL à la deuxième entrée de l'onduleur OND.

De préférence, le signal de commande de commutation peut être tel que l'onduleur OND achemine de l'énergie électrique depuis la source DC vers la machine électrique synchrone MEL de sorte que la machine électrique synchrone MEL présente un fonctionnement communément appelé « moteur » et/ou un fonctionnement communément appelé « générateur ». Classiquement, l'onduleur OND comporte plusieurs bras de commutation (non représenté), de préférence au moins un bras de commutation pour chaque phase de la machine électrique, pour transformer le signal continu depuis la source DC en un signal alternatif pour les phases de la machine électrique MEL. Chaque bras de commutation comporte au moins un commutateur commandé. De manière classique, on peut commander chaque commutateur des bras de commutation au moyen d'une modulation de largeur d'impulsion connue sous l'acronyme MLI (ou PWM de l'anglais Pulse Width Modulation).

En outre, le capteur optionnel CAP de position angulaire ou de vitesse de rotation angulaire peut être configuré pour appliquer le signal de position angulaire (respectivement de vitesse de rotation angulaire) à une entrée correspondante du calculateur CAL.

Dans la présente demande, l'indice d indique la valeur « directe » dans le repère de Park, l'indice q indique la valeur « quadratique » dans le repère de Park, et l'indice dq indique un vecteur des valeurs « directe » et « quadratique ». Par exemple, la tension v_{dq} désigne les tensions (v_{d}, v_{q}).

Pour rappel, un signal périodique se décompose en une somme de signaux sinusoïdaux de fréquences *f_{fond}* et des multiples de *f_{fond}. f_{fond}* est appelée fréquence fondamentale. Les autres fréquences sont appelées harmoniques. Le signal fondamental est celui dominant, possédant la fréquence « principale ». Pour les courants d'une machine électrique synchrone, le fondamental est le signal à la fréquence électrique, qui est aussi équivalente à la vitesse électrique du rotor. Les harmoniques sont les fréquences multiples de *f_{fond}.* D'une manière générale, un fondamental ou un harmonique est défini par son rang, son amplitude et sa phase. On peut exprimer la fréquence fondamentale comme : ${f}_{fond} = {f}_{elecRot} = Pp ∗ \frac{pi}{30} ∗ {N}_{rpm}$

Où *f_{fond}* est la fréquence du fondamental exprimée en Hz, *f_{elecRot}* est la fréquence électrique du rotor, *Pp* est le nombre de paires de pôles et *Nᵣₚₘ* est la vitesse mécanique du rotor exprimée en tr/min.

Dans la présente demande, lorsque le terme fondamental est associé à un courant ou à une tension, il s'agit de la composante du courant ou de la tension à sa fréquence fondamentale. De même, lorsqu'un courant ou une tension est associé à un harmonique de rang H-1 ou H+1, il s'agit de la composante du courant ou de la tension à la fréquence harmonique de rang H-1 ou H+1 (c'est-à-dire H-1 ou H+1 fois la fréquence fondamentale).

Le procédé de nettoyage de courants dans le repère (dq) et de détermination des courants harmoniques permet de déterminer, à partir des mesures de courant dans les phases de la machine électrique, et pour un rang d'harmonique H prédéterminé :
- Les courants direct et quadratique filtrés et nettoyés, c'est-à-dire les courants mesurés et exprimés dans le repère de Park sans les harmoniques de rang H,
- Les courants direct et quadratique du rang H+1, c'est-à-dire l'harmonique de rang H+1 du courant mesuré exprimé dans le repère de Park, et
- Les courants direct et quadratique du rang H-1, c'est-à-dire l'harmonique de rang H-1 du courant mesuré exprimé dans le repère de Park.

Ces courants sont déterminés afin d'assurer une commande de la machine électrique. En particulier, les courants direct et quadratique peuvent être comparés à des consignes de courant de manière à réaliser une régulation de courant de la machine électrique.

Avantageusement, pour ce procédé, les courants mesurés peuvent être exprimés dans le repère de Clarke, qui permet de modéliser un système triphasé par un modèle diphasé. Il s'agit d'un changement de repère, dont les axes sont fixés au stator, et notés dans la suite de la demande α et β. La transformée de Concordia peut être utilisée à la place de Clarke dans l'ensemble de la présente demande, la seule différence est que Clarke conserve les amplitudes des signaux alors que Concordia conserve les puissances.

Le procédé de nettoyage de courants dans le repère (dq) et de détermination des courants harmoniques met en œuvre les étapes suivantes :
A) Première rotation des signaux mesurés (exprimés dans le repère de Clarke) d'un angle de - (H+1) fois θ, θ étant l'angle électrique du rotor, ainsi les signaux mesurés sont exprimés dans le repère de Park lié à l'harmonique de rang H+1,
B) Application d'un premier filtre passe-haut aux signaux issus de l'étape A, pour en déduire les courants direct et quadratique de l'harmonique de rang H+1, au moyen d'une comparaison entre les signaux en entrée du premier filtre passe-haut et en sortie du premier filtre passe-haut,
C) Deuxième rotation des courants filtrés en sortie de l'étape B, d'un angle de deux H fois θ, ainsi les signaux mesurés sont exprimés dans le repère de Park lié à l'harmonique de rang H-1,
D) Application d'un deuxième filtre passe-haut aux courants issus de l'étape C, pour en déduire les courants direct et quadratique de l'harmonique de rang H-1, au moyen d'une comparaison entre les signaux en entrée du deuxième filtre passe-haut et en sortie du deuxième filtre passe-haut,
E) Troisième rotation des courants filtrés en sortie de l'étape D, d'un angle d'H fois θ, ainsi les signaux mesurés sont exprimés dans le repère de Park lié au fondamental, en d'autres termes, on détermine ainsi les composantes directe et quadratique des courants statoriques filtrés et nettoyés des harmoniques et dont la composante fondamentale est dominante.

Ainsi, ce procédé est basé sur trois rotations et deux filtres passe-haut en série. L'invention permet d'isoler les composantes harmoniques du reste du signal sans restreindre la régulation des courants aux courants fondamentaux. Cette méthode est moins dépendante de la fréquence électrique des signaux par rapport aux méthodes classiques, ce qui permet de réduire l'ordre des filtres passes-hauts, et d'avoir un meilleur comportement en transitoire. La méthode d'extraction des courants harmoniques du reste du signal peut être généralisée à différents types de commande comme la suppression de bruits sur la mesure de courant, sans forcément l'ajout de boucle de régulation supplémentaire comme celle des harmoniques. Dans ce cas-là, cette chaîne de démodulation peut servir pour nettoyer les courants et stabiliser leur régulation.

Toutes ces étapes peuvent être mises en œuvre au sein d'un calculateur équipant une machine électrique.

Pour rappel, la rotation dans le repère de Park s'exprime par une matrice de rotation P. $P \left({θ}_{rot}\right) = \left[\begin{matrix}cos \left({θ}_{rot}\right) & - sin \left({θ}_{rot}\right) \\ sin \left({θ}_{rot}\right) & cos \left({θ}_{rot}\right)\end{matrix}\right]$

Avec *θᵣₒₜ* l'angle de rotation.

La figure 3 illustre, schématiquement et de manière non limitative, les étapes du procédé de détermination des courants direct et en quadrature nettoyés et filtrés dans le repère de Park et des harmoniques de courant selon un mode de réalisation de l'invention. Le courant mesuré *i_{αβ}* est exprimé dans le repère de Clarke. Pour cette figure, une unique flèche est représentée entre chaque étape. A l'exception de la flèche en entrée (exprimée dans le repère de Clarke), chaque flèche correspond à deux composantes : une composante directe et une composante quadratique (repère de Park).

Une première rotation P dans le repère de Park est appliqué d'un angle de -(H+1)θ. Puis, on applique un premier filtre passe-haut FPH1 aux signaux issus de la première rotation. En sortie du premier filtre passe-haut, on applique une deuxième rotation P dans le repère de Park d'un angle de 2Hθ. Puis, on applique un deuxième filtre passe-haut FPH2 aux signaux issus de la deuxième rotation. En sortie du deuxième filtre passe-haut, on applique une troisième rotation d'un angle de Hθ, ce qui permet de déterminer les courants direct et en quadrature nettoyés et filtrés dans le repère de Park, notés i_{dqf} (c'est-à-dire i_{df} et i_{qf}).

De plus, un premier comparateur (illustré sur les figures par un cercle barré, dont les signes « + » et « - » indiquent les opérations mathématiques associées) fait la différence entre les signaux en entrée du premier filtre passe-haut FPH1 et en sortie du premier filtre passe-haut FPH1, pour déterminer les harmoniques de courant mesuré de rang H+1, notées i_{dq(h+1)} (c'est-à-dire i_{d(h+1)} et i_{q(h+1)}).

En outre, un deuxième comparateur fait la différence entre les signaux en entrée du deuxième filtre passe-haut FPH2 et en sortie du deuxième filtre passe-haut FPH2, pour déterminer les harmoniques de courant mesuré de rang H-1 notées i_{dq(h-1)} (c'est-à-dire i_{d(h-1)} et i_{q(h-1)}).

Pour les différentes mises en œuvre de l'invention, un rang d'harmonique H est prédéterminé. De préférence, le rang d'harmonique électrique H peut être choisi parmi l'harmonique 6, l'harmonique 12, ou l'harmonique mécanique de rang six fois le nombre de paires de pôles de la machine électrique, ou l'harmonique mécanique de rang douze fois le nombre de paires de pôles de la machine électrique. En effet, il peut s'agir d'un rang d'harmonique électrique générant une oscillation de couple (par exemple les harmoniques 6 et 12) et/ou d'un rang d'harmonique mécanique générant des NVH (par exemple les harmoniques six fois le nombre de paires de pôles de la machine électrique ou douze fois le nombre de paires de pôles de la machine électrique, qui sont les équivalents mécaniques des harmoniques 6 et 12 électriques).

Selon un premier mode de réalisation, on commande une machine électrique, notamment une machine synchrone, comprenant plusieurs phases et pilotée par un onduleur pourvu de bras de commutation par phase de ladite machine électrique. Pour ce premier mode de réalisation, on peut mettre en œuvre les étapes suivantes :
1. Acquisition des consignes du fondamental de courant (exprimés dans le repère de Park) ;
2. Mesure des courants dans lesdites phases de la machine électrique ;
3. Transformation des mesures de courant dans le repère de Clarke ou de Concordia ;
4. On applique les étapes A à E pour déterminer les courants idqf mesurés et nettoyés et filtrés dont la composante fondamentale est dominante, et des harmoniques de courant mesuré de rang H-1 et H+1, à partir des mesures de courant exprimées dans le repère de Clarke ou de Concordia ;
5. On détermine des consignes de tension dans le repère de Park (direct et quadratique), à partir des consignes du fondamental de courant, du courant idqf mesuré et nettoyé et filtré ;
6. On détermine un signal de commutation dudit onduleur au moyen desdites consignes de tension fondamentale ; et
7. On commande lesdits bras du commutation duit onduleur au moyen dudit signal de commande de commutation.

L'invention permet d'isoler les composantes harmoniques du reste du signal sans restreindre la régulation des courants aux courants fondamentaux. Cette méthode est moins dépendante de la fréquence électrique des signaux par rapport aux méthodes classiques, ce qui permet de réduire l'ordre des filtres passes-hauts, et d'avoir un meilleur comportement en transitoire.

Toutes ces étapes peuvent être mises en œuvre au sein d'un calculateur équipant une machine électrique.

Lors de l'étape 3), on transforme les mesures de courant dans le repère abc vers le repère αβ, au moyen de la matrice suivante : ${T}_{32} = \frac{2}{3} \left[\begin{matrix}1 & - \frac{1}{2} & - \frac{1}{2} \\ 0 & \frac{\sqrt{3}}{2} & - \frac{\sqrt{3}}{2}\end{matrix}\right]$

Pour l'étape 4), on peut mettre en œuvre les étapes du procédé de détermination des courants idqf dans le repère de Park et des harmoniques de courant selon l'une quelconque des variantes ou des combinaisons de variante décrites ci-dessus.

Pour l'étape 5), on peut déterminer les consignes de tension fondamentale au moyen d'un régulateur de courant fondamental, à partir des consignes de courant fondamental et des courants idqf mesurés. On appelle régulateur un système de contrôle permettant d'améliorer les performances d'un asservissement (d'un système en boucle fermé). Le régulateur peut avoir pour entrée un premier comparateur qui compare la composante directe de la consigne de courant fondamental, et la composante directe du courant mesuré et filtré dans le repère de Park, et un deuxième comparateur qui compare la composante quadratique de la consigne de courant fondamental, et la composante quadratique du courant mesuré et filtré dans le repère de Park. En sortie, le régulateur détermine une composante directe d'une consigne de la tension et une composante quadratique de la consigne de la tension dans le repère de Park.

Lors de l'étape 6), on applique une rotation, dans le repère de Park, d'un angle θ à la consigne de tension fondamentale.

Une transformée inverse de Clarke, T23, est ensuite appliquée à cette consigne de tension fondamentale. ${T}_{23} = \left[\begin{matrix}1 & 0 \\ - \frac{1}{2} & \frac{√ 3}{2} \\ - \frac{1}{2} & - \frac{√ 3}{2}\end{matrix}\right]$

On peut déterminer alors un signal de commande de commutation de l'onduleur au moyen des consignes de tension. De préférence, on peut déterminer le signal de commande de commutation au moyen d'un contrôle de vecteur spatial noté SVM (de l'anglais « Space vector modulation »), ou toute méthode analogue.

Lors de l'étape 7), on applique le signal de commande de commutation déterminé pour contrôler l'onduleur et assurer la commande de la machine électrique.

La figure 4 illustre, schématiquement et de manière non limitative, les étapes d'un premier mode de réalisation selon une mise en œuvre. Les éléments classiques identiques aux figures 1 et 2 ne seront pas redétaillés. La commande COM comprend la mesure des courants iₐ, i_{b} et i_{c} dans les phases de la machine électrique. Ces mesures de courant sont transformées dans le repère de Clarke au moyen de la matrice T32. Puis en sortie, on applique les étapes illustrées lors de la figure 3 pour déterminer les trois mesures de courant : les mesures de courant de l'harmonique de rang H+1 i_{dq(H+1)}, les mesures de courant de l'harmonique de rang H-1 i_{dq(H-1)}, et les mesures des courants dans le repère de Park i_{df} et i_{qf}. Pour cette boucle d'asservissement, chaque flèche correspond à deux composantes : une composante directe et une composante quadratique.

Le système de commande COM comprend un régulateur du courant fondamental REGf. En entrée du système de commande, on acquiert les consignes de courant fondamental notées i_{dref} et i_{qref}.

On applique une rotation P(θ), dans le repère de Park, d'un angle θ à la consigne de tension fondamentale V_{dref} et V_{qref}.

Une transformée inverse de Clarke T23 est ensuite appliquée à la somme de ces trois consignes de tension pour se positionner dans le repère abc.

On détermine alors un signal de commande de commutation SVM de l'onduleur OND au moyen des consignes de tension additionnées.

De plus, l'invention concerne un procédé de commande d'une machine électrique, pour lequel on injecte des harmoniques de rang H-1 et H+1. Selon un premier mode de réalisation de l'invention, on commande la machine électrique à partir de consignes de fondamentaux de courant, de consignes de courant d'harmonique H-1 et de consignes de courant d'harmonique H+1. Ces consignes de courant peuvent être déterminées de manière classique par toute méthode connue de l'homme du métier. A titre indicatif, et non limitatif (pour l'exemple de l'harmonique de rang 6), le calcul par éléments finis permet de déterminer les courants i_{dqref} correspondant à un couple donné (pour une régulation en couple) ainsi que les consignes i_{dq5ref} et i_{dq7ref} permettant de minimiser les oscillations du couple harmonique de rang 6.

Pour ce deuxième mode de réalisation, on peut mettre en œuvre les étapes suivantes :
1) Acquisition des consignes du fondamental de courant et d'harmoniques de courant de rang H+1 et H-1 (exprimés dans le repère de Park) ;
2) Mesure des courants dans lesdites phases de la machine électrique ;
3) Transformation des mesures de courant dans le repère de Clarke ;
4) On applique les étapes A à E pour déterminer les courants idqf mesurés dont la composante fondamentale est dominante, et des harmoniques de courant mesuré de rang H-1 et H+1, à partir des mesures de courant exprimées dans le repère de Clarke ;
5) On détermine des consignes de tension dans le repère de Park (dq), de tension de l'harmonique de rang H+1 et de tension de l'harmonique de rang H-1, à partir des consignes du fondamental de courant et d'harmoniques de courant de rang H+1 et H-1 et dudit idqf mesuré, et des harmoniques de courant mesuré de rang H-1 et H+1 ;
6) On détermine un signal de commutation dudit onduleur au moyen desdites consignes de tension fondamentale, de tension de l'harmonique de rang H+1 et de tension de l'harmonique de rang H-1 ; et
7) On commande lesdits bras du commutation duit onduleur au moyen dudit signal de commande de commutation.

Ainsi, on peut commander une machine électrique par injection d'harmoniques, dans le but de réduire les ondulations de couple, et/ou de réduire les NHV. L'invention permet d'isoler les composantes harmoniques du reste du signal sans restreindre la régulation des courants aux courants fondamentaux. Cette méthode est moins dépendante de la fréquence électrique des signaux par rapport aux méthodes classiques ce qui permet de réduire l'ordre des filtres passes-hauts, et d'avoir un meilleur comportement en transitoire.

Toutes ces étapes peuvent être mises en œuvre au sein d'un calculateur équipant une machine électrique.

Lors de l'étape 3), on transforme les mesures de courant dans le repère abc vers le repère αβ, au moyen de la matrice suivante : ${T}_{32} = \frac{2}{3} \left[\begin{matrix}1 & - \frac{1}{2} & - \frac{1}{2} \\ 0 & \frac{\sqrt{3}}{2} & - \frac{\sqrt{3}}{2}\end{matrix}\right]$

Pour l'étape 4), on peut mettre en œuvre les étapes du procédé de détermination des courants idqf dans le repère de Park et des harmoniques de courant selon l'une quelconque des variantes ou des combinaisons de variante décrites ci-dessus.

Pour l'étape 5), on peut déterminer les consignes de tension fondamentale au moyen d'un régulateur de courant fondamental, à partir des consignes de courant fondamental et des courants idqf mesurés. On appelle régulateur un système de contrôle permettant d'améliorer les performances d'un asservissement (d'un système en boucle fermé). Le régulateur peut avoir pour entrée un premier comparateur qui compare la composante directe de la consigne de courant fondamental, et la composante directe du courant mesuré et filtré dans le repère de Park, et un deuxième comparateur qui compare la composante quadratique de la consigne de courant fondamental, et la composante quadratique du courant mesuré et filtré dans le repère de Park. En sortie, le régulateur détermine une composante directe d'une consigne de la tension et une composante quadratique de la consigne de la tension dans le repère de Park.

Pour l'étape 5), on peut déterminer les consignes de tension de l'harmonique H-1 au moyen d'un régulateur de l'harmonique de courant H-1, à partir des consignes de courant de l'harmonique de rang H-1 et de l'harmonique de rang H-1 de courant mesurés. On appelle régulateur un système de contrôle permettant d'améliorer les performances d'un asservissement (d'un système en boucle fermé). Le régulateur peut avoir pour entrée un premier comparateur qui compare la composante directe de la consigne de courant de l'harmonique de rang H-1, et la composante directe de l'harmonique de rang H-1 de courant mesuré, et un deuxième comparateur qui compare la composante quadratique de la consigne de courant de l'harmonique de rang H-1, et la composante quadratique de l'harmonique de rang H-1 de courant mesuré. En sortie, le régulateur détermine une composante directe de la consigne de l'harmonique de rang H-1 de la tension et une composante quadratique de la consigne de l'harmonique de rang H-1 de la tension.

Pour l'étape 5), on peut déterminer les consignes de tension de l'harmonique H+1 au moyen d'un régulateur de l'harmonique de courant H+1, à partir des consignes de courant de l'harmonique de rang H+1 et de l'harmonique de rang H+1 de courant mesuré. On appelle régulateur un système de contrôle permettant d'améliorer les performances d'un asservissement (d'un système en boucle fermé). Le régulateur peut avoir pour entrée un premier comparateur qui compare la composante directe de la consigne de courant de l'harmonique de rang H+1, et la composante directe de l'harmonique de rang H+1 de courant mesuré, et un deuxième comparateur qui compare la composante quadratique de la consigne de courant de l'harmonique de rang H+1, et la composante quadratique de l'harmonique de rang H+1 de courant mesuré. En sortie, le régulateur détermine une composante directe de la consigne de tension de l'harmonique de rang H+1 et une composante quadratique de la consigne de tension de l'harmonique de rang H+1.

Lors de l'étape 6), on additionne les trois consignes de tension (fondamental, harmonique de rang H-1 et harmonique de rang H+1) préalablement transformées dans le même repère. Ainsi, on injecte les harmoniques de rang H-1 et H+1 dans la machine électrique. On peut appliquer une rotation, dans le repère de Park, d'un angle θ à la consigne de tension fondamentale. On peut appliquer une rotation, dans le repère de Park, d'un angle (H+1) fois θ de la consigne de tension de l'harmonique de rang H+1. On peut appliquer une rotation, dans le repère de Park, d'un angle -(H-1) fois θ de la consigne de l'harmonique de tension de rang H-1. Ces injections d'harmoniques créent des flux harmoniques de rang H-1 et H+1 et influencent les harmoniques de couple et les forces vibratoires de la machine électrique.

Une transformée inverse de Clarke, T23, est ensuite appliquée à la somme de ces trois consignes de tension pour se positionner dans le repère abc. ${T}_{23} = \left[\begin{matrix}1 & 0 \\ - \frac{1}{2} & \frac{√ 3}{2} \\ - \frac{1}{2} & - \frac{√ 3}{2}\end{matrix}\right]$

On peut déterminer alors un signal de commande de commutation de l'onduleur au moyen des consignes de tension additionnées. De préférence, on peut déterminer le signal de commande de commutation au moyen d'un contrôle de vecteur spatial noté SVM (de l'anglais « Space vector modulation »), ou toute méthode analogue.

Lors de l'étape 7), on applique le signal de commande de commutation déterminé pour contrôler l'onduleur et assurer la commande de la machine électrique.

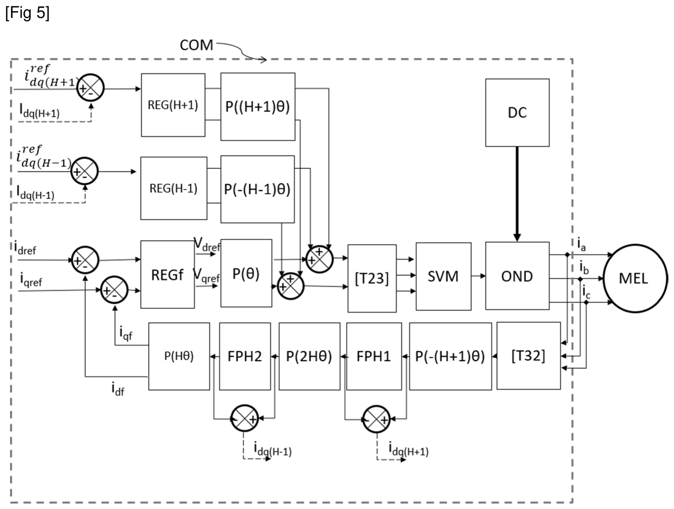

La figure 5 illustre, schématiquement et de manière non limitative, les étapes de ce deuxième mode de réalisation selon une mise en œuvre de l'invention. Les éléments classiques identiques aux figures 1 et 2 ne seront pas redétaillés. La commande COM comprend la mesure des courants iₐ, i_{b} et i_{c} dans les phases de la machine électrique. Ces mesures de courant sont transformées dans le repère de Clarke au moyen de la matrice T32. Puis en sortie, on applique les étapes illustrées lors de la figure 3 pour déterminer les trois mesures de courant : les mesures de courant de l'harmonique de rang H+1 i_{dq(H+1)}, les mesures de courant de l'harmonique de rang H-1 i_{dq(H-1)}, et les mesures des courants dans le repère de Park i_{df} et i_{qf}. Pour cette boucle d'asservissement, chaque flèche correspond à deux composantes : une composante directe et une composante quadratique. Les mesures des harmoniques sont illustrées par des flèches en pointillés pour une meilleure lisibilité de la figure. Ces mesures sont mises en œuvre dans les comparateurs pour les harmoniques (en haut à gauche de la figure).

Le système de commande COM comprend trois régulateurs, un régulateur du courant fondamental REGf, un régulateur REG(H-1) de l'harmonique de rang H-1 du courant, et un régulateur REG (H+1) de l'harmonique de rang H+1 du courant. En entrée du système de commande, on acquiert les consignes de courant fondamental notées i_{dref} et i_{qref}, les consignes de l'harmonique H+1 de courant ${i}_{dq \left(H+1\right)}^{ref}$ et les consignes de l'harmonique H-1 de courant ${i}_{dq \left(H-1\right)}^{ref}$.

On additionne les trois consignes de tension (fondamentale, harmonique de rang H-1 et harmonique de rang H+1) préalablement transformées dans le même repère. On applique une rotation P(θ), dans le repère de Park, d'un angle θ à la consigne de tension fondamentale V_{dref} et V_{qref}. On applique une rotation P((H+1)θ), dans le repère ((dq)(H+1)), d'un angle (H+1) fois θ de la consigne de l'harmonique de rang H+1 de tension. On applique une rotation P(-(H-1)θ), dans le repère (-(dq)(H-1)), d'un angle -(H-1) fois θ de la consigne de l'harmonique de rang H-1 de tension.

Une transformée inverse de Clarke T23 est ensuite appliquée à la somme de ces trois consignes de tension pour se positionner dans le repère abc.

On détermine alors un signal de commande de commutation SVM de l'onduleur OND au moyen des consignes de tension additionnées.

Selon un troisième mode de réalisation, on commande la machine électrique à partir de consignes de fondamentaux de courant, de consignes de tension d'harmonique H-1 et de consignes de tension d'harmonique H+1. Ces consignes de courant et de tension peuvent être déterminées de manière classique par toute méthode connue de l'homme du métier. A titre indicatif, et non limitatif (pour l'exemple de l'harmonique de rang 6), le calcul par éléments finis permet de déterminer les courants i_{dqref} correspondant à un couple donné (pour une régulation en couple) ainsi que les consignes i_{dq5ref} et i_{dq7ref} permettant de minimiser les oscillations du couple harmonique de rang 6. L'utilisation du modèle circuit électrique équivalent des machines électriques, et des équations analytiques correspondantes, permet par la suite de calculer les tensions V_{dq5ref} et V_{dq7ref}.

Pour ce troisième mode de réalisation, on peut mettre en œuvre les étapes suivantes :
1) Acquisition des consignes du fondamental de courant et des consignes d'harmoniques de tension de rang H+1 et H-1, exprimées dans le repère de Park ;
2) Mesure des courants dans lesdites phases de la machine électrique ;
3) Transformation des mesures de courant dans le repère de Clarke ;
4) On applique les étapes A à E pour déterminer les courants idqf mesurés dont la composante fondamentale est dominante, à partir des mesures de courant exprimées dans le repère de Clarke ;
5) On détermine des consignes de tension dans le repère de Park (dq), à partir des consignes du fondamental de courant et dudit courant idqf mesuré ;
6) On détermine un signal de commutation dudit onduleur au moyen desdites consignes de tension fondamentale, de tension de l'harmonique de rang H+1 et de tension de l'harmonique de rang H-1 ; et
7) On commande lesdits bras du commutation duit onduleur au moyen dudit signal de commande de commutation.

Ainsi, on peut commander une machine électrique par injection d'harmoniques, dans le but de réduire les ondulations de couple, et/ou de réduire les NHV. L'invention permet d'isoler les composantes harmoniques du reste du signal sans restreindre la régulation des courants aux courants fondamentaux. Cette méthode est moins dépendante de la fréquence électrique des signaux par rapport aux méthodes classiques ce qui permet de réduire l'ordre des filtres passes-hauts, et d'avoir un meilleur comportement en transitoire.

Toutes ces étapes peuvent être mises en œuvre au sein d'un calculateur équipant une machine électrique.

Lors de l'étape 3), on transforme les mesures de courant dans le repère abc vers le repère αβ, au moyen de la matrice suivante : ${T}_{23} = \frac{2}{3} \left[\begin{matrix}1 & - \frac{1}{2} & - \frac{1}{2} \\ 0 & \frac{\sqrt{3}}{2} & - \frac{\sqrt{3}}{2}\end{matrix}\right]$

Pour l'étape 4), on peut mettre en œuvre les étapes du procédé de détermination des courants idqf dans le repère de Park selon l'une quelconque des variantes ou des combinaisons de variante décrites ci-dessus.

Pour l'étape 5), on peut déterminer les consignes de tension fondamentale au moyen d'un régulateur de courant fondamental, à partir des consignes de courant fondamental et des courants idqf mesurés. On appelle régulateur un système de contrôle permettant d'améliorer les performances d'un asservissement (d'un système en boucle fermé). Le régulateur peut avoir pour entrée un premier comparateur qui compare la composante directe de la consigne de courant fondamental, et la composante directe du courant mesuré et filtré dans le repère de Park, et un deuxième comparateur qui compare la composante quadratique de la consigne de courant fondamental, et la composante quadratique du courant mesuré et filtré dans le repère de Park. En sortie, le régulateur détermine une consigne de composante directe de la tension et une consigne de la composante quadratique de la tension dans le repère de Park.

Lors de l'étape 6), on additionne les trois consignes de tension (fondamentale, harmonique de rang H-1 et harmonique de rang H+1) préalablement transformées dans le même repère. Ainsi, on injecte les harmoniques de rang H-1 et H+1 dans la machine électrique. On peut appliquer une rotation, dans le repère de Park, d'un angle θ à la consigne de tension fondamentale. On peut appliquer une rotation, dans le repère de((dq)(H+1)), d'un angle (H+1) fois θ de la consigne de l'harmonique de rang H+1 de tension. On peut appliquer une rotation, dans le repère de (-(dq)(H-1)), d'un angle -(H-1) fois θ de la consigne de l'harmonique de rang H-1 de tension.

Une transformée inverse de Clarke est ensuite appliquée à la somme de ces trois consignes de tension pour se positionner dans le repère abc.

On peut déterminer alors un signal de commande de commutation de l'onduleur au moyen des consignes de tension. De préférence, on peut déterminer le signal de commande de commutation au moyen d'un contrôle de vecteur spatial noté SVM (de l'anglais « Space vector modulation »), ou toute méthode analogue.

Lors de l'étape 7), on appliquer le signal de commande de commutation déterminé pour contrôler l'onduleur et assurer la commande de la machine électrique.

La figure 6 illustre, schématiquement et de manière non limitative, les étapes de ce troisième mode de réalisation selon une mise en œuvre de l'invention. Les éléments classiques identiques aux figures 4 et 5 ne seront pas redétaillés.

Le système de commande COM comprend un seul régulateur : un régulateur du courant fondamental REGf. En entrée, du système de commande, on acquiert les consignes de courant fondamental notées i_{dref} et i_{qref}, les consignes de tension de l'harmonique H+1 ${v}_{dh + 1}^{ref}$ et ${v}_{qh + 1}^{ref}$ et les consignes de tension de l'harmonique H-1 ${v}_{dh - 1}^{ref}$ et ${v}_{qh - 1}^{ref}$.

On additionne les trois consignes de tension (fondamentale, harmonique de rang H-1 et harmonique de rang H+1) préalablement transformées dans le même repère. On applique une rotation P(θ), dans le repère de Park, d'un angle θ à la consigne de tension fondamentale V_{dref} et V_{qref}. On applique une rotation P((H+1)θ), dans le repère((dq)(H+1)), d'un angle (H+1) fois θ de la consigne de l'harmonique de rang H+1 de tension ${v}_{dh + 1}^{ref}$ et ${v}_{qh + 1}^{ref}$. On applique une rotation P(-(H-1)θ), dans le repère (-(dq)(H-1)), d'un angle -(H-1) fois θ de la consigne de l'harmonique de rang H-1 de tension ${v}_{dh - 1}^{ref}$ et ${v}_{dh - 1}^{ref}$.

Une transformée inverse de Clarke T23 est ensuite appliquée à la somme de ces trois consignes de tension pour se positionner dans le repère abc.

On détermine alors un signal de commande de commutation SVM de l'onduleur OND au moyen des consignes de tension additionnées.

Le système de commande selon l'invention comprend un onduleur, un moyen de mesure du courant dans les phases de la machine électrique (par exemple des capteurs de courant), éventuellement un capteur de position et/ou de vitesse du rotor de la machine électrique, et un calculateur et une mémoire configurés pour mettre en œuvre les étapes du procédé de commande selon l'une quelconque des variantes ou des combinaisons de variantes décrites précédemment.

Selon un mode de réalisation de l'invention, la machine électrique tournante peut être une machine électrique synchrone, de préférence une machine électrique synchro-réluctante assistée d'aimants permanents, une machine électrique à pôles saillants ou à pôles lisses. En effet, le procédé et le système selon l'invention sont particulièrement adaptés à ce type de machine électrique, notamment car l'invention permet de prendre en compte les contraintes et le fonctionnement de tous types de machines.

### Exemple comparatif

Les caractéristiques et avantages du procédé selon l'invention apparaîtront plus clairement à la lecture de l'exemple d'application ci-après.

Pour cet exemple, on applique une commande d'une machine électrique synchrone à aimants permanents, d'une part selon le premier mode de réalisation du procédé de commande, et d'autre part selon une méthode de l'art antérieur mettant en œuvre des filtres passe bas. La régulation se focalise sur un harmonique 5 (rang H-1). On active la régulation à partir de 4,6 secondes.

La figure 7 illustre, pour l'application du procédé selon l'invention à cet exemple, les courants et tensions harmoniques dans la machine électrique en fonction du temps T en s. En haut de la figure, sont présentés les courants statoriques mesurés i_{dq5}, vus dans le repère tournant (dq5). Ces courants i_{dq5} passent à zéro lorsque la régulation est activée. Au milieu de la figure, sont présentés les tensions V_{dq5ref} à la sortie des régulateurs des courants harmoniques. Comme les deux harmoniques 5 et 7 se transforment en harmonique 6 dans le repère (dq), l'injection de l'un influence l'autre. En bas de la figure, sont présentés les courants mesurés i_{dq7} vus du repère tournant (dq7) permettant de voir l'effet de l'injection d'harmoniques des courants 5 sur les courants 7.

La figure 8 illustre, pour l'application du procédé selon l'invention, le courant dans les phases et son spectre avant et après la mise en route de la régulation. La partie gauche de la figure concerne les mesures avant la régulation, et la partie droite de la figure concerne les mesures après la régulation. La partie haute illustre le courant de la phase a iₐ en A en fonction du temps t en s, et la partie basse de la figure illustre le spectre du courant FFT de la phase a en fonction de l'harmonique H. On peut remarquer que pour l'exemple étudié avec un courant de 20A de fondamental, les niveaux des courants harmoniques sont conformes à ceux de la chaîne de démodulation avant l'activation de la régulation (modules de i_{dq5} et i_{dq7}). Après activation de la régulation, l'harmonique 5 est significativement réduit.

La figure 9 illustre, pour l'application du procédé selon l'art antérieur à cet exemple, les courants et tensions harmoniques dans la machine électrique en fonction du temps t en s. En haut de la figure, sont présentés les courants statoriques mesurés i_{dq5}, vus dans le repère tournant (dq5). Au milieu de la figure, sont présentés les tensions V_{dq5ref} à la sortie des régulateurs des courants harmoniques. En bas de la figure, sont présentés les courants mesurés i_{dq7} vus du repère tournant (dq7). On remarque que le procédé selon l'invention présente moins d'oscillations de courants et a un temps de réponse plus rapide avec moins de dépassement que la mise en œuvre du procédé selon l'art antérieur.

La figure 10 illustre, pour l'application du procédé selon l'art antérieur, le courant dans les phases et son spectre avant et après la mise en route de la régulation. La partie gauche de la figure concerne les mesures avant la régulation, et la partie droite de la figure concerne les mesures après la régulation. La partie haute illustre le courant de la phase a iₐ en A en fonction du temps t en s, et la partie basse de la figure illustre le spectre du courant FFT de la phase a en fonction de l'harmonique H. On peut remarquer que le procédé selon l'invention permet une régulation plus performante des harmoniques de rang 5 à 0 que le procédé selon l'art antérieur.

Ainsi, l'invention permet une régulation performante, rapide d'une machine électrique en maîtrisant les oscillations.

## Revendications

1. Procédé de détermination des courants statoriques filtrés i_{dqf}, et d'harmoniques de courant de rang H-1 et H+1 pour la commande d'une machine électrique (MEL) comprenant plusieurs phases, notamment d'une machine synchrone, H étant un harmonique de couple prédéterminé de ladite machine électrique (MEL), ledit procédé mettant en œuvre des mesures de courant (iₐ, i_{b}, i_{c}) dans les phases de ladite machine électrique exprimées dans le repère de Clarke ou de Concordia, **caractérisé en ce qu'**on met en œuvre les étapes suivantes :
a) On détermine, dans le repère tournant lié à l'harmonique de rang H+1, les courants direct et quadratique de l'harmonique de rang H+1 (i_{dq(H+1)}) au moyen d'une première matrice de rotation (P(-(H+1)θ)) desdits courants dans le repère de Clarke d'un angle de - (H+1) fois l'angle électrique du rotor et au moyen d'un premier filtre passe-haut (FPH1) ;
b) On détermine, dans le repère tournant lié à l'harmonique de rang H-1, les courants direct et quadratique de l'harmonique de rang H-1 (i_{dq(u-1)}) au moyen d'une deuxième matrice de rotation (P(2Hθ)) desdits courants de l'harmonique de rang H+1 (i_{dq(H+1)}) d'un angle de 2H fois l'angle électrique du rotor et au moyen d'un deuxième filtre passe-haut (FPH2) ; et
c) On détermine, dans le repère tournant lié au fondamental, les courants direct et quadratique des courants statoriques filtrés au moyen d'une troisième matrice de rotation (P(Hθ)) desdits courants de l'harmonique de rang H-1 (i_{dq(H-1)}) d'un angle de H-1 fois l'angle électrique du rotor.

2. Procédé selon la revendication 1, dans lequel ledit harmonique H prédéterminé est choisi parmi l'harmonique 6, l'harmonique 12, ou l'harmonique de rang six fois le nombre de paires de pôles de la machine électrique, ou l'harmonique de rang douze fois le nombre de paires de pôles de ladite machine électrique.

3. Procédé selon l'une des revendications précédentes, dans lequel chacune desdites matrices de rotation s'expriment par : $P \left({θ}_{rot}\right) = \left[\begin{matrix}cos \left({θ}_{rot}\right) & - sin \left({θ}_{rot}\right) \\ sin \left({θ}_{rot}\right) & cos \left({θ}_{rot}\right)\end{matrix}\right]$ avec *θᵣₒₜ* l'angle de rotation.

4. Procédé de commande d'une machine électrique (MEL), notamment une machine synchrone, comprenant plusieurs phases et pilotée par un onduleur (OND) pourvu de bras de commutation par phase de ladite machine électrique (MEL), **caractérisé en ce qu'**on met en œuvre les étapes suivantes :
a) On acquiert des consignes du fondamental de courant (i_{dref}, i_{qref}) ;
b) On mesure les courants (iₐ, i_{b}, i_{c}) dans lesdites phases de ladite machine électrique ;
c) On transforme lesdites mesures de courant dans le repère de Clarke ou de Concordia (iαβ) ;
d) On détermine les courants statoriques direct et quadratique mesurés et filtrés (i_{dqf}), et des harmoniques de courant mesuré de rang H-1 (i_{dq(H-1)}) et H+1 (i_{dq(H+1)}) au moyen du procédé selon l'une des revendications précédentes, à partir desdites mesures de courant exprimés dans le repère de Clarke ou de Concordia ;
e) On détermine (REG) des consignes de tension fondamentale (V_{dref}, V_{qref}), à partir des consignes du fondamental de courant et dudit courant statorique mesuré et filtré ;
f) On détermine un signal de commutation (SVM) dudit onduleur (OND) au moyen desdites consignes de tension fondamentale (V_{dref}, V_{qref}) ; et
g) On commande lesdits bras de commutation dudit onduleur au moyen dudit signal de commande de commutation.

5. Procédé de commande d'une machine électrique (MEL), notamment une machine synchrone, comprenant plusieurs phases et pilotée par un onduleur (OND) pourvu de bras de commutation par phase de ladite machine électrique (MEL), dans lequel on compense un harmonique de rang H prédéterminé de ladite machine électrique en injectant une consigne de tension d'un harmonique de rang H-1 et une consigne de tension d'un harmonique de rang H+1 dans la consigne de tension fondamentale de ladite machine électrique, **caractérisé en ce qu'**on met en œuvre les étapes suivantes :
a) On acquiert des consignes du fondamental de courant (i_{dref}, i_{qref}) et des consignes d'harmoniques de courant de rang H+1 et H-1 ( ${i}_{dq \left(H+1\right)}^{ref} , {i}_{dq \left(H-1\right)}^{ref}$) ;
b) On mesure les courants (iₐ, i_{b}, i_{c}) dans lesdites phases de ladite machine électrique ;
c) On transforme lesdites mesures de courant dans le repère de Clarke ou de Concordia (iαβ) ;
d) On détermine les courants direct et quadratique mesurés et filtrés (i_{dqf}), et des harmoniques de courant mesuré de rang H-1 (i_{dq(H-1)}) et H+1 (i_{dq(H+1)}) au moyen du procédé selon l'une des revendications 1 à 3, à partir desdites mesures de courant exprimés dans le repère de Clarke ou de Concordia ;
e) On détermine des consignes de tension fondamentale (V_{dref}, V_{qref}), de tension de l'harmonique de rang H+1 et de tension de l'harmonique de rang H-1, à partir des consignes du fondamental de courant et d'harmoniques de courant de rang H+1 et H-1 et dudit courant statorique mesuré et filtré, et des harmoniques de courant mesuré de rang H-1 (i_{dq(H+1)}) et H+1 (i_{dq(H+1)});
f) On détermine un signal de commutation (SVM) dudit onduleur (OND) au moyen desdites consignes de tension fondamentale (V_{dref}, V_{qref}), en injectant lesdites consignes de tension de l'harmonique de rang H+1 et de tension de l'harmonique de rang H-1 ; et
g) On commande lesdits bras de commutation dudit onduleur au moyen dudit signal de commande de commutation.

6. Procédé selon la des revendication 5, dans lequel on détermine lesdites consignes de tension de l'harmonique de rang H+1 et les consignes de tension de l'harmonique de rang H-1, respectivement au moyen d'un régulateur de courant harmonique de rang H+1 (REG(H+1)) et d'un régulateur de courant harmonique de rang H-1 (REG(H-1)).

7. Procédé de commande d'une machine électrique (MEL), notamment une machine synchrone, comprenant plusieurs phases et pilotée par un onduleur (OND) pourvu de bras de commutation par phase de ladite machine électrique (MEL), dans lequel on compense un harmonique de rang H prédéterminé de ladite machine électrique en injectant une consigne de tension d'un harmonique de rang H-1 et une consigne de tension d'un harmonique de rang H+1 dans la consigne de tension fondamentale de ladite machine électrique, **caractérisé en ce qu'**on met en œuvre les étapes suivantes :
a) On acquiert des consignes du fondamental de courant (i_{dref}, i_{qref}) et des consignes de tension d'harmoniques de rang H+1 et H-1 ;
b) On mesure les courants (iₐ, i_{b}, i_{c}) dans lesdites phases de ladite machine électrique ( ${v}_{dq \left(H+1\right)}^{ref} , {v}_{dq \left(H-1\right)}^{ref}$) ;
c) On transforme lesdites mesures de courant dans le repère de Clarke ou de Concordia (iαβ) ;
d) On détermine les courants direct et quadratique mesuré et filtré (i_{dqf}) et des harmoniques de courant mesuré de rang H-1 (i_{dq(H-1)}) et H+1 (i_{dq(H+1)}) au moyen du procédé selon l'une des revendications 1 à 3, à partir desdites mesures de courant exprimés dans le repère de Clarke ou de Concordia ;
e) On détermine des consignes de tension fondamentale (V_{dref}, V_{qref}), à partir des consignes du fondamental de courant et dudit courant filtré et mesuré ;
f) On détermine un signal de commutation (SVM) dudit onduleur (OND) au moyen desdites consignes de tension fondamentale (V_{dref}, V_{qref}), en injectant lesdites consignes de tension de l'harmonique de rang H+1 et de tension de l'harmonique de rang H-1 ; et
g) On commande lesdits bras du commutation duit onduleur (OND) au moyen dudit signal de commande de commutation.

8. Procédé selon l'une des revendications 5 à 7, dans lequel on injecte ladite consigne de tension de l'harmonique de rang H+1 après application d'une rotation dans le repère direct et quadratique de rang H+1 d'un angle de (H+1) fois l'angle du rotor, et on injecte ladite consigne de tension de l'harmonique de rang H-1 après une rotation dans le repère direct et quadratique de rang H-1 d'un angle de -(H-1) fois l'angle du rotor on détermine lesdites consignes de courant fondamental, au moyen d'un régulateur de courant fondamental (REG).

9. Procédé selon l'une des revendications 5 à 8, dans lequel on détermine lesdites consignes de courant fondamental, au moyen d'un régulateur de courant fondamental (REG).

10. Procédé selon l'une des revendications 4 à 9, dans lequel on détermine ledit signal de commande de commutation au moyen d'un contrôle vectoriel (SVM).

11. Système de commande d'une machine électrique (MEL) comprenant un onduleur (OND) pourvu de bras de commutation, un calculateur et une mémoire configurée pour mettre en œuvre les étapes du procédé de commande selon l'une des revendications 4 à 10 pour commander ledit onduleur (OND), de préférence ladite machine électrique (MEL) étant une machine synchrone à aimants permanents.
